# EUROPEAN PATENT APPLICATION

(11) **EP 2 628 914 A1**
(43) Date of publication of application: **21.08.2013**
(21) Application number: 12155517.1
(22) Date of filing: 15.02.2012
(51) Int. Cl.: F01N 13/18, F16L 11/16

(54) **Exhaust flex liner and method of manufacture**

(71) Applicant: Senior Uk Limited, Gwent NP11 3HY (GB)
(72) Inventor: Tester, Nathan, Gwent, NP11 3HY South Wales (GB)
(74) Representative: Franks & Co Limited

(57) **Abstract**

An exhaust flex liner and a method of forming an exhaust flex liner. The flex liner is formed by winding an elongate strip of metal around a mandrel to form the elongate strip into a tubular shape having a first curved surface of a first radius of curvature. The first curved surface extends in a direction along a main axial length of the exhaust flex line. The elongate strip is also formed into a second curved surface of a second radius of curvature. The second surface extends in a direction along a main length of the exhaust flex liner and the second radius of curvature is greater than said first radius of curvature.

## Description

### Field of the Invention

The present invention relates to a method of manufacture of an exhaust flex liner.

### Background of the Invention

A conventional exhaust flex consists of a flexible tubular liner, extending between first and second cylindrical end pieces; a flexible corrugated bellows member; and covered with an outer sock which is either woven or knitted.

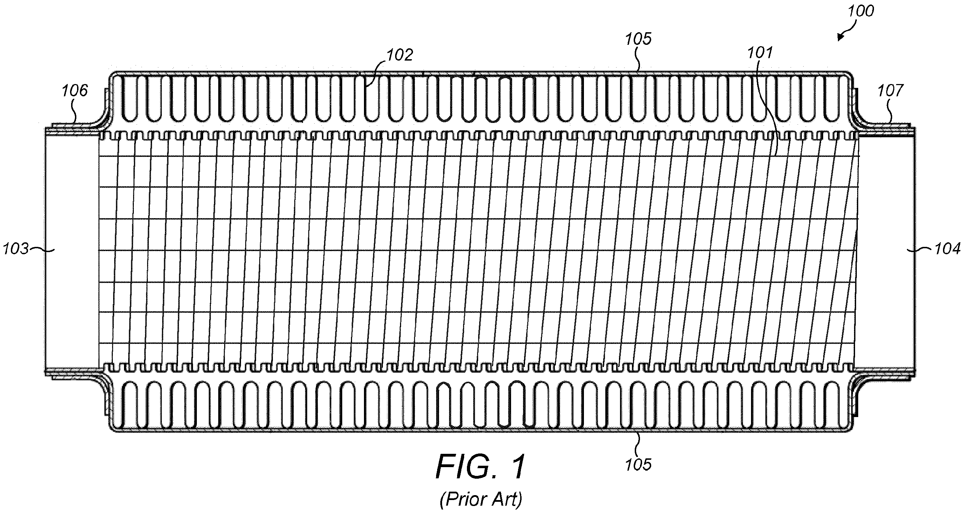

Referring to Figure 1 herein, there is illustrated schematically a conventional exhaust flex 100, showing the liner 101; the bellows 102; the cylindrical ends 103, 104, and an outer sock 105. The assembly is completed by first and second collars or end rings 106, 107.

The inner liner comprises a single strip of metal wound in a spiral to form a flexible cylindrical tube. The metal strip has, in cross section, a substantially "U" shape or "C" shape. Various cross sectional profiles of the metal strip are possible, including folded over portions in order to lock each successive turn of the spiral liner to its preceding or neighboring turn, so that the whole liner can extend axially and bend in a direction transverse to the axial direction, thereby absorbing vibration and movement between the two ends of the liner when the exhaust flex is in situ in a vehicle exhaust system.

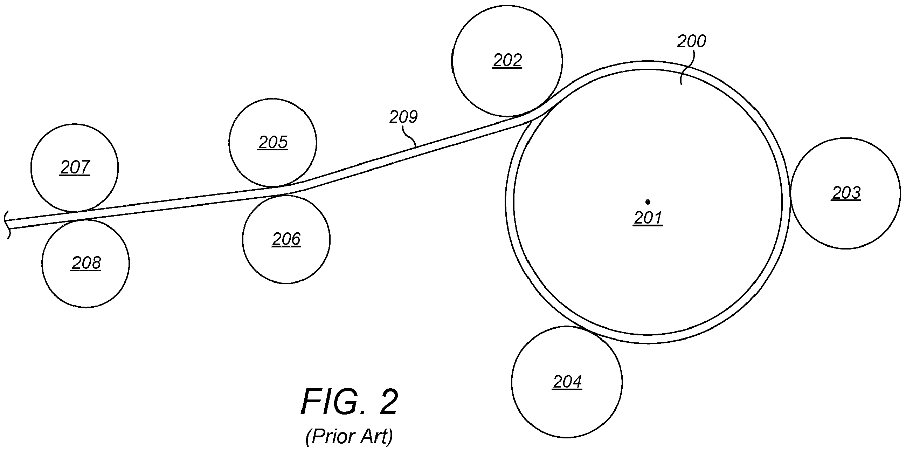

Referring to Figure 2 herein, there is illustrated schematically part of an exhaust flex liner manufacturing machine. Conventionally, an exhaust flex liner is manufactured on a mandrel, by winding a strip of metal around the mandrel.

The machine comprises a substantially cylindrical elongate mandrel 200 which rotates about a central axis 201; a plurality of non-driven cylindrical planetary rollers, or dog wheels 202 - 204 which urge in a direction towards the central mandrel 201 for pressing the web or strip of metal 205 onto the mandrel; a first set of feed rollers 205, 206 (known as feed dogs), which feed the metal strip 209 onto the mandrel; and a second set of rollers or feed dogs 207, 208 which feed the metal strip into the first set of rollers.

A continuous strip of metal 209 is wound around the mandrel in a spiral, and interlocks with itself. The non-driven dog wheels 202 - 204 press the metal strip tightly to the mandrel, bending the metal strip into a substantially cylindrical spiral shape.

Since the metal strip 205 needs to be wound tightly around the mandrel 201, and formed from an elongate shape into a circular shape, under pressure from the non-driven planetary rollers 202 - 204, the mandrel needs to grip the metal strip to pull the strip tightly onto the mandrel and to keep the whole exhaust flex liner rotating with the mandrel.

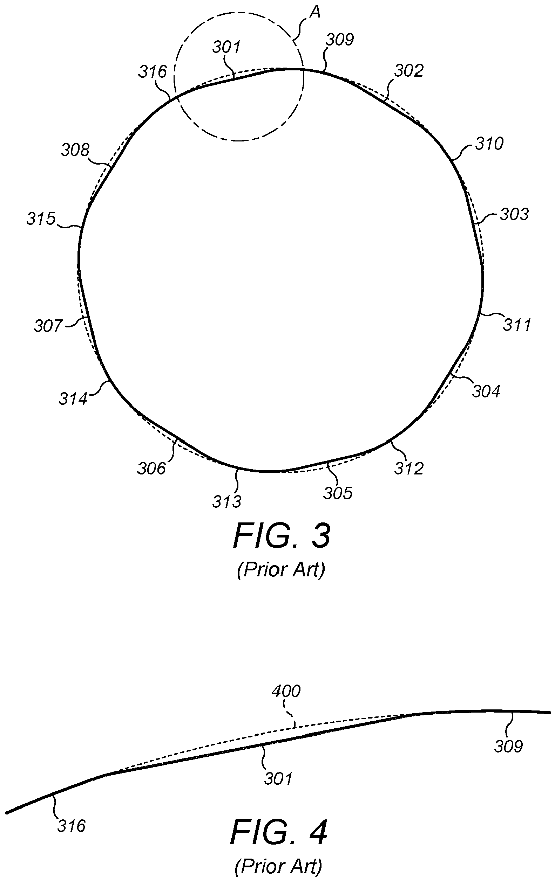

Referring to Figure 3 herein, there is illustrated schematically in view from one end a known mandrel to facilitate the mandrel gripping the metal strip, the external shape of the mandrel is not perfectly cylindrical, but has a series of alternating flat surfaces 301 - 308 and part cylindrical surfaces 309 - 316, known as "flats and rounds" as shown in Figure 3 herein.

The known mandrel comprises a substantially cylindrical outer wall, having eight regularly spaced flat surfaces 301 - 308 extending along the length of a mandrel, alternating with eight part cylindrical surfaces 309 - 316 extending along the length of the mandrel.

These flats and rounds provide driving surfaces which act to turn the exhaust flex with the rotating mandrel and which grips the metal strip of the exhaust flex liner as the liner is wound.

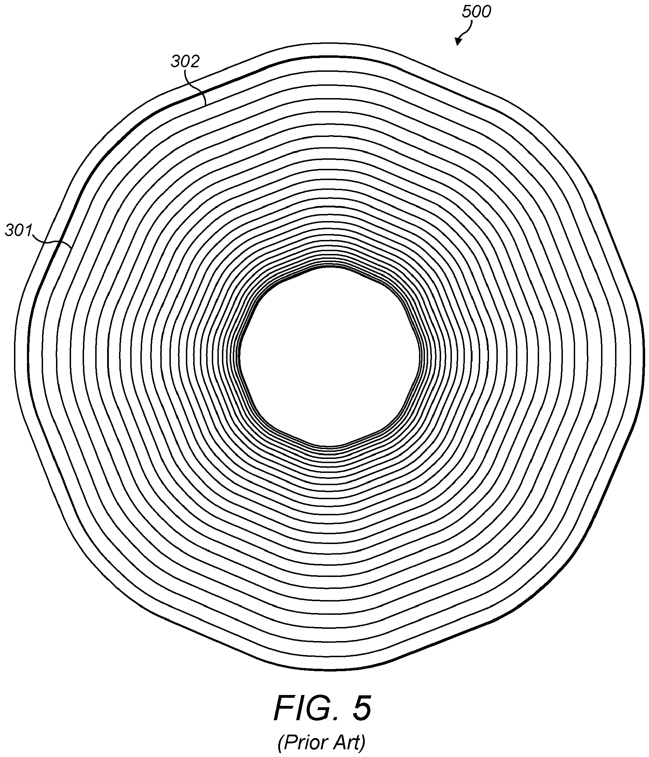

Referring to Figure 4 herein, there is illustrated schematically a detail of the section A as shown in Figure 5, showing schematically a difference of curvature of two round surfaces 309, 316 (part cylindrical surfaces) adjacent either side of an elongate flat surface 301. A perfect cylindrical surface 400 is shown dotted for comparison. The dimensions as shown in cross section of Figure 4 are not to scale.

Referring to Figure 5 herein, there is illustrated schematically in view from one end, a known exhaust flex liner 500 formed on a conventional mandrel. The liner is not perfectly cylindrical, but has a corresponding series of flats 501 and rounds 502 extending around the liner corresponding to the flats and rounds of the surface of the mandrel on which the liner was formed. In the example shown in Figure 5 there are eight flats extending longitudinally along the side walls of the flex, alternating with eight rounds extending longitudinally along the length of the exhaust flex liner.

It is also known to produce a nominally perfectly cylindrical exhaust flex liner by using a different machine, which has a general layout similar to that of figure 2 herein, but which has planetary rollers or wheels around the mandrel which are driven, and which retain the metal strip to the cylindrical mandrel without the need for flat mandrel surfaces. However, these machines are much more expensive, since they have more power driven dog wheels around the mandrel.

Known exhaust hoses which have a perfectly cylindrical tube are more prone to constricting their internal passage under skew force, (rotational force about a central axis of the liner) than a hose which is formed with alternating flat and round wall portion, which lock adjacent the windings of the hose together in a circumferentially.

### Summary of the Invention

According to a first aspect, there is provided an exhaust flex liner comprising:
an elongate metal strip wound into a tube;
said elongate strip being formed into at least one first curved portion and at least one second curved portion;
said second curved portion having a greater radius of curvature than said first curved portion.

According to a second aspect there of the present invention, there is provided a method of forming an exhaust flex liner from an elongate metal strip, said method characterised by:
forming said elongate strip into a first curved wall portion of a first radius of curvature; and
forming said elongate strip into a second curved wal portion of a second radius of curvature,
wherein said second radius of curvature is greater than said first radius of curvature.

According to a third aspect there of the present invention, there is provided a method of forming an exhaust flex liner, said method comprising:
forming an elongate strip of metal around an elongate mandrel;
**characterised in that** said mandrel comprises:
   an elongate body, having an outer surface comprising:
   at least one first curved surface having a first radius of curvature; and
   at least one second curved surface having a second radius of curvature said second radius of curvature being greater than said first radius of curvature.

According to a fourth aspect there of the present invention, there is provided a mandrel for forming an exhaust flex liner, said mandrel comprising:
an elongate body, having an outer surface comprising:
   at least one first curved surface having a first radius of curvature; and
   at least one second curved surface having a second radius of curvature said second radius of curvature being greater than said first radius of curvature.

Other aspects are as set out in the claims herein.

### Brief Description of the Drawings

For a better understanding of the invention and to show how the same may be carried into effect, there will now be described by way of example only, specific embodiments, methods and processes according to the present invention with reference to the accompanying drawings in which:
Figure 1 illustrates schematically in cut away view from one side a conventional exhaust flex liner hose, manufactured according to a conventional manufacturing process;
Figure 2 illustrates schematically in view from one end, part of a conventional exhaust flex liner manufacturing machine having an elongate mandrel, and a plurality of feed rollers;
Figure 3 illustrates schematically in view from one end, a known mandrel for forming a known exhaust flex liner, having a series of flat elongate surfaces and a series of part cylindrical elongate surfaces radiating around a main central axis of rotation;
Figure 4 illustrates schematically a detail A of part of the outer surface of the known mandrel of Figure 3;
Figure 5 illustrates schematically in perspective view from one end, a known exhaust flex liner, having a tubular substantially cylindrical side wall having a plurality of elongate flat wall portions, alternating with a plurality of elongate part cylindrical wall portions;
Figure 6 illustrates schematically in cut away view from one side, a novel exhaust flex liner hose embodiment manufactured according to a specific manufacturing process described herein;
Figure 7 illustrates schematically in view from one end, parts of an exhaust flex liner manufacturing machine incorporating a novel mandrel as described herein, for manufacturing the novel exhaust flex liner as described with reference to Figure 6 herein;
Figure 8 illustrates schematically in view from one end a novel mandrel for forming the novel exhaust flex liner of Figure 6 herein;
Figure 9 illustrates schematically in detail, a section B of the mandrel of Figure 8 in close up view; and
Figure 10 illustrates schematically in perspective view from one end, a novel exhaust flex liner embodiment manufactured in accordance with the manufacturing process presented herein.

### Detailed Description of the Embodiments

There will now be described by way of example a specific mode contemplated by the inventors. In the following description numerous specific details are set forth in order to provide a thorough understanding. It will be apparent however, to one skilled in the art, that the present invention may be practiced without limitation to these specific details. In other instances, well known methods and structures have not been described in detail so as not to unnecessarily obscure the description.

Specific embodiments and methods described herein provide a novel exhaust flex liner hose; and method of manufacture for forming a novel exhaust flex liner using a novel mandrel, wherein the mandrel has overall a substantially cylindrical shape, with an outer surface comprising a first plurality of curved surfaces having a radius of curvature equal to a radius of the overall mandrel (herein, a first set of arcs), and a second set of curved surfaces extending along a length of the mandrel, each having a radius of curvature greater than a radius of said first curved surfaces (herein, a second set of arcs).

The resultant exhaust flex liner is formed of a continuous elongate strip of metal, formed into a tubular shape, into which the successive turns of the spiral wound metal wall are capable of moving with respect to each other both in an axial direction, along a main axis of the tube, and in a direction transverse to the main axis of the tube, so that the tubular hose can bend and accommodate vibrations and movements when in use in an exhaust system.

In view from one end, the wall of the tubular liner is formed having a first set of curved elongate surfaces of a first radius of curvature, alternating with a second set of curved surfaces, having a radius of curvature greater than that of the first set of surfaces. The shape of the transition between the first set of curved portions and the second set of curved portions is gradual and does not form an abrupt sharp angle as is the case with prior art exhaust flex liners which have round and flat portions around their circumference.

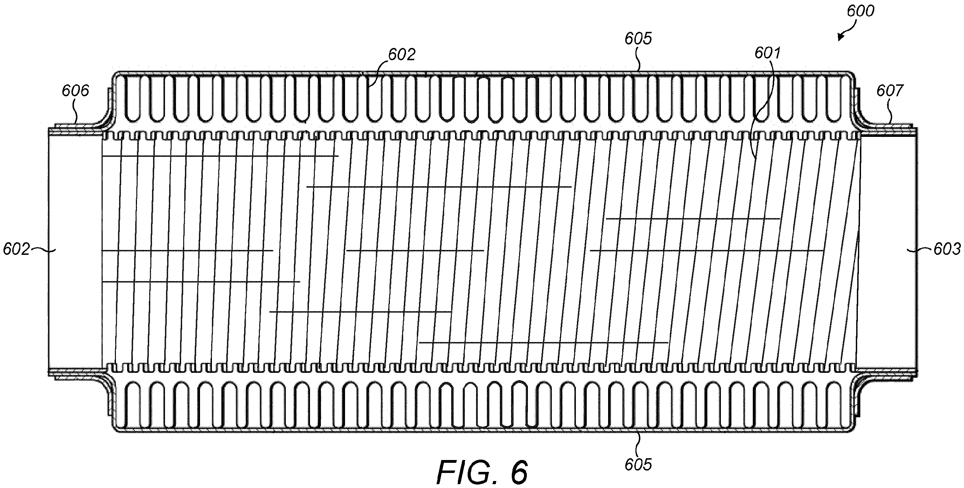

Referring to Figure 6 herein, there is illustrated schematically a first embodiment exhaust flex in cut away view from one side. The exhaust flex comprises an internal flexible liner 601 comprising a wound web of metal; first and second cylindrical liner ends 602, 603; a corrugated flexible tube 604 surrounding the liner; surrounding the corrugated tube, a flexible knitted or woven sock 605; a first collar 606 at a first end of the exhaust flex; and a second collar 607 at a second end of the exhaust flex.

In the specific embodiment shown, the internal flexible liner hose 601 comprises a wall having, when viewed from one end, a plurality of first arc portions each having an external surface having a radius of curvature substantially equal to the radius of curvature of a corresponding respective first arc surface on the mandrel which is used to form the liner, plus a radial distance equal to the wall thickness of the exhaust flex liner; , and on the inside of the tubular liner, a first set of inner surfaces each having a radius of curvature substantially the same as the radius of curvature the set of first arc surfaces on the outside of the mandrel used to form the liner.

Alternating with the first liner wall portions are a second set of wall portions, each having an outer radius of curvature which is greater than the outer radius of curvature of the first wall portions, and each second wall portion having an inner arced surface of radius of curvature which is greater that the inner radius of curvature of the adjacent first arc wall portions. The second wall portions have the same thickness as the first wall portions since they are made from the same continuous strip of metal wound around the novel mandrel.

The inner surfaces of the second arc wall portions have a radius of curvature substantially the same as the radius of curvature of the corresponding respective outer surfaces of the mandrel used to form the hose liner.

In the best mode herein, the first arc wall portions of the hose liner have an inner radius, substantially the same as the radius of a perfect solid cylinder which fits exactly in the liner when in straight, un-deformed state. However in the general case the first or second arc wall portions are not restricted to the same radius of curvature of the perfect cylinder which fits tightly within the central passage of the spiral wound tubular hose liner.

In the embodiment shown, there are eight first curved wall portions each extending along a main length of the internal flexible liner 601, and eight second curved wall portions each extending along the main length of the flexible liner 601, wherein individual ones of the first set of curved portions are interleaved with and alternate with individual ones of the second set of curved portions, around the perimeter of the tube when viewed end on.

A specific method of manufacture of the exhaust flex liner component 601 will now be described.

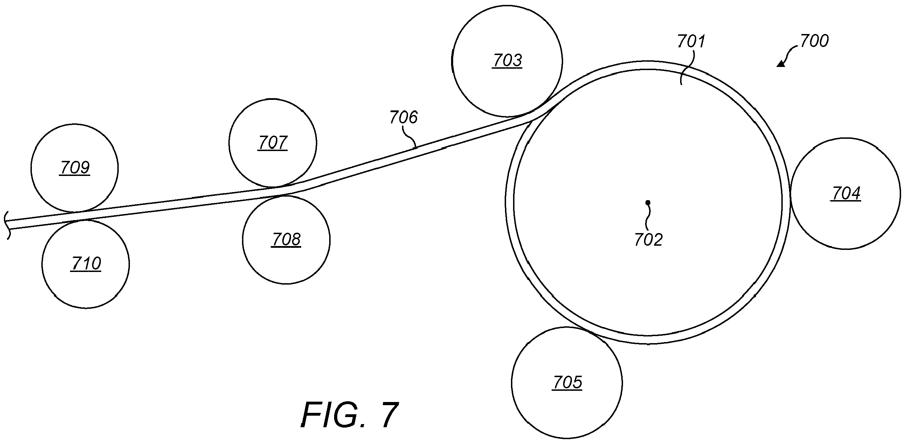

Referring to Figure 7 herein, there is illustrated schematically an apparatus 700 for forming the exhaust flex liner of Figure 6 herein.

The apparatus comprises a driven substantially cylindrical mandrel 701 which rotates about its central axis 702; a plurality of non-driven cylindrical planetary rollers or dog wheels 703 - 705 which urge in a direction towards the central mandrel 701 for pressing a web or strip of metal 706 onto the mandrel; a first set of feed rollers 707, 708 (known as feed dogs), which feed the metal strip 706 onto the mandrel; and a second set of rollers or feed dogs 709, 710 which feed the metal strip into the first set of rollers.

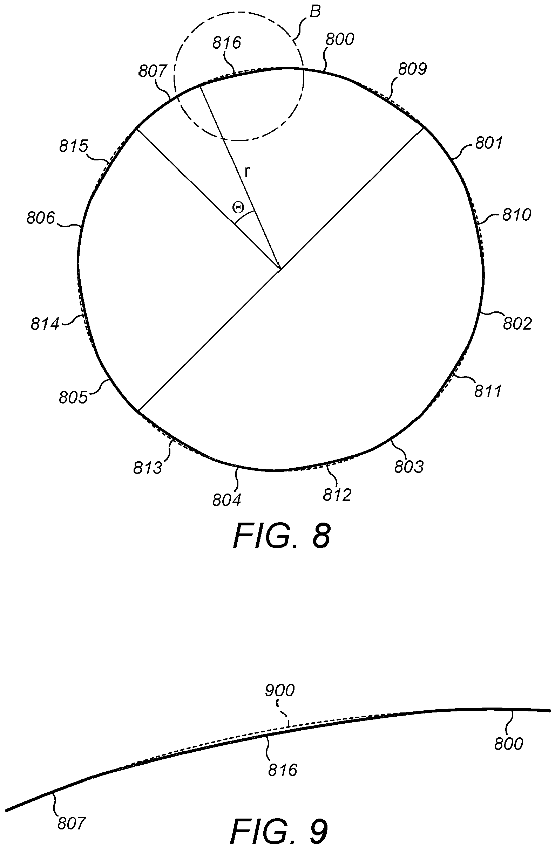

Since the metal strip 706 needs to be wound tightly around the mandrel 701, and deformed from an elongate shape into a tubular shape, under pressure from the non-driven planetary rollers 703 - 705, the mandrel needs to grip the metal strip to pull the strip through the rollers and to keep a tight winding to form the tubular wall of the liner. To facilitate the mandrel gripping the metal strip, the external shape of the mandrel is not perfectly cylindrical, but has a series of elongate curved surfaces of differing radii of curvature as shown in Figure 8 herein.

Referring to Figure 8 herein, there is illustrated schematically in cross sectional view from one end, the mandrel used in the apparatus of Figure 7 herein. The mandrel comprises an elongate rigid metal body which is overall substantially but not perfectly cylindrical. The mandrel comprises a first plurality of curved outer surfaces 800 - 807. In the preferred embodiment, each said first outer surface is substantially part cylindrical and having an outer radius the same as the maximum outer radius of the overall mandrel. There are also a second set of curved surfaces 809 - 816, radially equidistantly spaced apart and alternating between the first set of curved surfaces. Each surface of the second set of curved surfaces has a radius of curvature which is greater than the radius of curvature of either of its neighboring ones of the first set of curved surfaces. In a best mode embodiment, the radius of curvature of each second curved surface is greater than or equal to 1.01 times the radius of curvature of any one of the first set of curved surfaces.

In the example shown in Figure 8 herein, there are eight elongate curved surfaces of the first curvature and eight elongate surfaces of the second curvature alternating with each other around a circumference of the mandrel. Each of the surfaces occupies a same radial angle Θ as each other, in this case, 360° / 16 = 22.5°.

The second curved surfaces have a radial angle when viewed in a direction along a main length of the mandrel, such that one or more said second surfaces around the circumference of the mandrel are sufficient to grip the metal strip and wind the metal strip onto itself as the mandrel rotates, without the metal strip slipping on the mandrel. In the embodiment shown, the radial angle of each second curved surface is 22.5°, but in the general case, the second curved surfaces preferably each subtend a radial angle of 5° or greater.

Referring to Figure 9 herein, there is illustrated schematically the surface portion B of the mandrel as shown in Figure 8, showing in end view a single second curved surface 816, bounded on each side respectively by one of the first curved surfaces 807, and another of the curved surfaces 800. A perfectly cylindrical surface extrapolated from the outer surfaces of the first set of curved surfaces is shown as a dotted construction line 900 in Figure 9. As can be seen in Figure 9, the second curved surface 816 has curvature and is not flat, but is not as curved as the cylindrical surface 900.

In the embodiment shown in Figures 7 to 9, the first curved surfaces coincide with a perfectly cylindrical curved surface of the mandrel, but in the general case, the first curved surfaces do not necessarily need to have a same radius of curvature r1 as the outer radius r of the whole mandrel, but could have a radius of curvature slightly greater than the outer radius of the mandrel, but less than the radius of curvature r2 of the second curved surfaces.

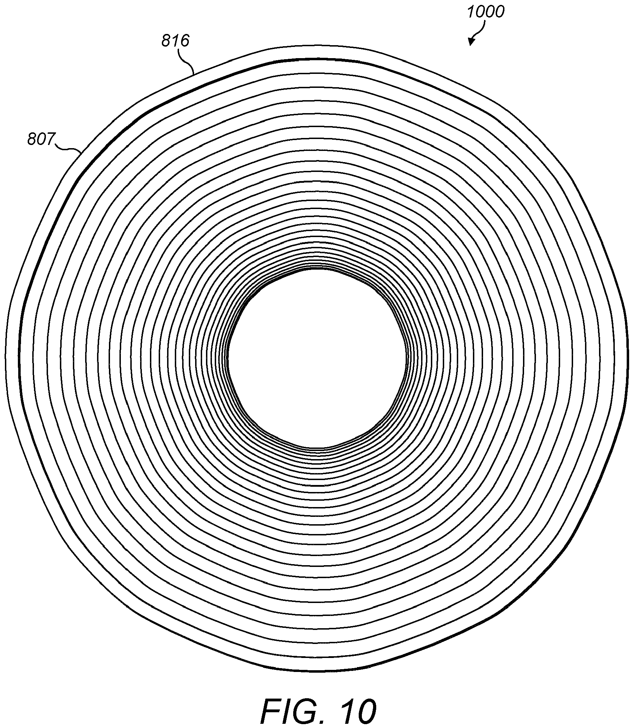

Referring to Figure 10 herein, there is illustrated schematically in perspective view from one end a novel exhaust flex liner 1000 manufactured according to the process described herein before. The liner comprises a single strip of metal, wound in a spiral and overlapping itself at its edges, formed into a hollow tube substantially overall of an approximate, but not perfectly, cylindrical shape. Each winding or turn of the flexible liner is substantially cylindrical in cross sectional view along a main central axis of the liner when the liner is in un-deformed straight configuration. Each turn or winding comprises a plurality of first curved regions (or surfaces) 807 of first radius of curvature, which correspond to the first curved surface regions on the mandrel; and a plurality of second curved regions (or surfaces) 816 having a second, greater radius of curvature, which correspond to positions where the liner has formed over the plurality of second curved surfaces of the mandrel.

Since the liner has been formed around the novel mandrel disclosed in Figures 6 to 9 herein, the plurality of second regions of curvature of the windings line up along a length of the exhaust flex liner, as do each of the plurality of regions of first curvature, giving a slightly ribbed appearance as shown in Figure 10 herein.

The resultant exhaust flex liner is flexible both in an axial direction and in a direction transverse to the axial direction, allowing a wide range of extension, bend and translation movements of the exhaust flex liner.

The purpose of the plurality of arcs on the mandrel is to increase the grip and friction during the manufacturing process, in a similar manner to the flat surfaces on the prior art mandrel but without causing such an extreme change of shape of the liner, as in the prior art liner of Figures 1 to 5 herein. The "arc" surfaces also offer improvements in production processing as follows:

The method of manufacture described herein is applicable to a multi-segment liner shape, that is, any number of combinations of first arcs and second arcs on the mandrel, and on the resulting exhaust flex liner.

The process is also applicable to any diameter of exhaust flex liner which can be manufactured by winding a metal strip around a mandrel.

The radius of the first set of internal arc surfaces of the liner is a direct result of the first set of arc curved surfaces 801 - 808 on the outer diameter of the mandrel. Each of the first arc elongate surfaces are interrupted by and alternate with individual ones of the second set of internal arc surfaces of the tubular hose, which form a bridge between adjacent first arc surfaces on the inside of the liner, and which second internal arc surfaces correspond to the second set of arc curved surfaces 809 - 816 on the mandrel.

Since the transition from the first arc surfaces to the second arc surfaces is smoother than the corresponding prior art round to flat transition, there is a more consistent tool contact pressure on the strip of metal and on the exhaust flex liner as it is being formed.

The process described herein allows for a more consistent shape profile of an exhaust flex liner, more closely assimilating a pure cylinder, than the prior art process. This allows for tighter manufacturing tolerances and improved performance of the resultant exhaust flex. Since the hose is not perfectly cylindrical, it retains resistance to torsional deformation since the alternating first and second arc portions on one winding tend to locate with the corresponding first and second arc portion of the neighbouring windings, locking the adjacent windings together in a circumferential direction, and resisting reduction of the internal passage dimensions under torsional forces.

There is a reduced induced forming stress in the material, resulting in less stresses in the finished exhaust flex liner product and longer product life.

The improved manufacturing process enables increased manufacturing speeds without compromising performance of the resulting exhaust flex liner.

By providing a smooth transition between a first arc and the second arc shapes on the mandrel, and its resulting smooth transition in the finished exhaust flex liner, there is improved tooling contact pressure during the hose forming process. The improved tooling contact enables an increase in the manufacturing speed without compromising the hose performance criteria.

Similarly, exhaust flex liners manufactured in accordance with the disclosed novel process have much improved ageing characteristics compared to prior art exhaust flex liners using the round/flat mandrel, and may retain their flexibility for a significantly longer period in use than prior art exhaust flex liners.

## Claims

1. An exhaust flex liner comprising:
an elongate metal strip wound into a tube;
said elongate strip being formed into at least one first curved portion and at least one second curved portion;
said second curved portion having a greater radius of curvature than said first curved portion.

2. The exhaust flex liner as claimed in claim 1, comprising:
a plurality of said first curved portion; and
a plurality of said second curved portions;
wherein said first and second curved portions alternate with each other around a circumference of said tubular exhaust flex liner.

3. The exhaust flex liner as claimed in claim 1 or 2, wherein a plurality of said first curved portions extend along a main length of said liner; and
a plurality of said second curved portion extends along a main length of said exhaust flex liner.

4. The exhaust flex liner as claimed in any one of the preceding claims, wherein said second radius of curvature is 1.01 or greater times said first radius of curvature.

5. The exhaust flex liner as claimed in any one of the preceding claims, wherein said second curved portion extends over a radial angle of 5° or greater.

6. A method of forming an exhaust flex liner from an elongate metal strip, said method **characterised by**:
forming said elongate strip into a first curved wall portion of a first radius of curvature; and
forming said elongate strip into a second curved wall portion of a second radius of curvature,
wherein said second radius of curvature is greater than said first radius of curvature.

7. The method as claimed in claim 6, comprising:
forming said elongate strip into a tubular shape having
a plurality of said first curved wall portions of said first radius of curvature;
and
a plurality of said second curved wall portions of said second radius of curvature.

8. The method as claimed in claim 7, wherein said second plurality of curved wall portion are interleaved with said first plurality of curved wall portions.

9. The method as claimed in claims 6, to 8 wherein:
said plurality of first curved wall portions extend in a direction along a main axial length of said exhaust flex liner; and
said plurality of second curved wall portions extend in said direction along a main length of said exhaust flex liner.

10. The method as claimed in any one of the claims 6 to 9, comprising:
forming said strip into a plurality of interlocking windings, such that a plurality of said first curved wall portions of successive windings extend in a direction along a main length of said exhaust flex liner; and
a plurality of said second curved wall portions of successive windings extend in a direction along said main length of said exhaust flex liner.

11. The method as claimed in any one of claims 6 to 10, wherein said first curved wall portion subtends substantially a same radial angle as said second curved surface.

12. The method as claimed in claim 10, wherein each said first curved wall portion subtends substantially a same radial angle as each other said first curved wall portion ; and
each said second curved wall portion subtends substantially a same radial angle as each other said second curved wall portion .

13. The method as claimed in any one of claims 6 to 12, wherein said first curved wall portion and said second curved wall portion each extend a radial angle of more than 5°.

14. The method as claimed in any one of claims 6 to 13, comprising winding said strip onto a mandrel, wherein a radial angle of said second wall portion extends a sufficiently large angle such that said mandrel is capable of gripping said elongate strip to wind said strip onto said mandrel.

15. A method of forming an exhaust flex liner, said method comprising:
forming an elongate strip of metal around an elongate mandrel;
**characterised in that** said mandrel comprises:
an elongate body, having an outer surface comprising:
at least one first curved surface having a first radius of curvature; and
at least one second curved surface having a second radius of curvature said second radius of curvature being greater than said first radius of curvature.

16. The method as claimed in claim 15, wherein said radius of curvature of said second curved surface is greater than or equal to 1.01 times said radius of curvature of said first curved surface.

17. The method as claimed in claims 15 or 16, wherein said mandrel is substantially symmetrical in cross section when viewed in a direction axially.

18. The method as claimed in any one of claims 15 to 17, wherein said first set of curved surfaces alternate with said second set of curved surfaces.

19. A mandrel for forming an exhaust flex liner, said mandrel comprising:
an elongate body, having an outer surface comprising:
at least one first curved surface having a first radius of curvature; and
at least one second curved surface having a second radius of curvature said second radius of curvature being greater than said first radius of curvature.
